# EUROPEAN PATENT APPLICATION

(11) **EP 4 435 067 A1**
(43) Date of publication of application: **25.09.2024**
(21) Application number: 22895332.9
(22) Date of filing: 20.10.2022
(51) Int. Cl.: C09D 11/30, B41M 5/00, B41J 2/01

(54) **INKJET INK AND IMAGE-RECORDING METHOD**

(30) Priority: 16.11.2021 JP 2021186578
(71) Applicant: FUJIFILM Corporation, Tokyo 106-8620 (JP)
(72) Inventor: MURAI, Daigo, Ashigarakami-gun, Kanagawa 258-8577 (JP)
(74) Representative: HGF
(86) International application number: PCT/JP2022/039170
(87) International publication number: WO 2023/090046

(57) **Abstract**

Provided are an ink jet ink including water and an organic solvent A having a surface tension of 20.0 mN/m to 29.0 mN/m, a Clog P value of 0.10 to 1.60, and a boiling point of 80°C to 140°C, in which a content of the organic solvent A is in a range of 1% by mass to 20% by mass with respect to a total amount of the ink jet ink, and a dynamic surface tension of the inkjet ink at 10 ms is in a range of 28.0 mN/m to 38.0 mN/m, and an image recording method.

## Description

### BACKGROUND OF THE INVENTION

### 1. Field of the Invention

The present disclosure relates to an inkjet ink and an image recording method.

### 2. Description of the Related Art

In recent years, in a method of recording an image using an aqueous ink containing water, improvement of various performances of an image recorded material to be obtained has been examined.

For example, JP2020-105310A discloses an aqueous inkjet ink containing a colorant, a binder resin (A), a surfactant, and a water-soluble organic solvent, in which the colorant includes C.I. Pigment Red 185, the binder resin (A) includes a binder resin (a-1) having an acid value of 1 to 80 mgKOH/g, and a content of the water-soluble organic solvent having a boiling point of 240°C or higher at 1 atm is 8% by mass or less with respect to a total amount of the ink jet ink.

### SUMMARY OF THE INVENTION

However, it is required to improve the jettability of the ink, improve the graininess of an image in an image recorded material to be obtained, and suppress bleeding in some cases.

The present disclosure has been made in consideration of the above-described circumstances, and an object of an embodiment of the present invention is to provide an ink and an image recording method, which enable recording of an image with excellent j ettability, excellent graininess, and suppressed bleeding.

The present disclosure includes the following aspects.
<1> An ink jet ink comprising: water; and an organic solvent A having a surface tension of 20.0 mN/m to 29.0 mN/m, a Clog P value of 0.10 to 1.60, and a boiling point of 80°C to 140°C, in which a content of the organic solvent A is in a range of 1% by mass to 20% by mass with respect to a total amount of the ink jet ink, and a dynamic surface tension of the inkjet ink at 10 ms is in a range of 28.0 mN/m to 38.0 mN/m.
<2> The inkjet ink according to <1>, further comprising: an organic solvent B having a boiling point of 150°C to 250°C, in which a content of the organic solvent B is in a range of 10% by mass to 35% by mass with respect to the total amount of the inkjet ink.
<3> The ink jet ink according to <2>, in which a proportion of the content of the organic solvent A in a total content of the organic solvent A and the organic solvent B is in a range of 5% by mass to 50% by mass.
<4> The inkjet ink according to any one of <1> to <3>, in which the organic solvent A is a monoalcohol having 4 or 5 carbon atoms.
<5> The inkjet ink according to any one of <1> to <4>, in which the organic solvent A is a linear monoalcohol.
<6> The ink jet ink according to any one of <1> to <5>, further comprising: a silicone-based surfactant.
<7> An image recording method comprising: a step of applying the ink jet ink according to any one of <1> to <6> onto a base material using an ink jet recording method, to record an image.

According to the embodiment of the present invention, it is possible to provide an ink jet ink and an image recording method, which enable recording of an image with excellent jettability, excellent graininess, and suppressed bleeding.

### DESCRIPTION OF THE PREFERRED EMBODIMENTS

Hereinafter, an inkjet ink and an image recording method of the present disclosure will be described in detail.

In the present specification, a numerical range shown using "to" indicates a range including the numerical values described before and after "to" as a minimum value and a maximum value, respectively.

In a numerical range described in a stepwise manner in the present specification, an upper limit or a lower limit described in a certain numerical range may be replaced with an upper limit or a lower limit in another numerical range described in a stepwise manner. Further, in a numerical range described in the present disclosure, an upper limit or a lower limit described in a certain numerical range may be replaced with a value described in an example.

In the present disclosure, in a case where a plurality of substances corresponding to respective components in a composition are present, the amount of the respective components in the composition indicates the total amount of the plurality of substances present in the composition unless otherwise specified.

In the present specification, a combination of two or more preferred embodiments is a more preferred embodiment.

In the present disclosure, the meaning of the term "step" includes not only an independent step but also a step whose intended purpose is achieved even in a case where the step is not clearly distinguished from other steps.

In the present specification, the term "image" means general films, and the term "image recording" means formation of an image (that is, a film). The concept of "image" in the present specification also includes a solid image.

In the present specification, "(meth)acrylate" is a concept including both acrylate and methacrylate, "(meth)acryloyl group" is a concept including both acryloyl group and methacryloyl group, and "(meth)acrylic acid" has a concept including both acrylic acid and methacrylic acid.

In the present specification, "ink jet ink" is an ink for recording an image using an ink jet recording method.

### [Ink jet ink]

An ink jet ink according to the present disclosure (hereinafter, also simply referred to as "ink") includes water and an organic solvent A having a surface tension of 20.0 mN/m to 29.0 mN/m, a Clog P value of 0.10 to 1.60, and a boiling point of 80°C to 140°C, in which the content of the organic solvent A is in a range of 1% by mass to 20% by mass with respect to the total amount of the ink, and a dynamic surface tension of the ink jet ink at 10 ms is in a range of 28.0 mN/m to 38.0 mN/m.

As a result of intensive examination conducted by the present inventors, it was found that an image with excellent jettability, excellent graininess, and suppressed bleeding can be recorded by using the ink according to the present invention. The reason why the above-described effects are obtained is assumed as follows.

In a case where the ink is applied onto the recording medium, the organic solvent having a low surface tension is collected at a gas-liquid interface, and thus the dynamic surface tension of the ink having landed on a recording medium decreases with time. Thereafter, in a case where water contained in the ink is evaporated by being dried, the organic solvent having a low surface tension moves to the inside of the ink, and as a result, the decreased dynamic surface tension tends to increase. In the related art, for example, in a case where a solid image is recorded using a first ink, and a line image is recorded on the solid image using a second ink, bleeding of the line image occurs in some cases. The reason for this is assumed to be that, since the dynamic surface tension of the first ink having landed earlier is increased after a decrease once and then increased to be greater than the dynamic surface tension of the second ink having landed later, the second ink having a relatively lower dynamic surface tension is attracted to the first ink having a relatively higher dynamic surface tension, and thus bleeding occurs. Further, in the related art, in a case where an image is recorded using an ink, landing interference occurs in some cases. The landing interference denotes a phenomenon in which ink droplets landed first and ink droplets landed later are united. In a case where the landing interference occurs, the image density is uneven, and the image gives an impression of being rough. The roughness of the image is also referred to as "graininess".

Meanwhile, the ink according to the present disclosure contains an organic solvent A having a surface tension of 20.0 mN/m to 29.0 mN/m, a Clog P value of 0.1 to 1.6, and a boiling point of 80°C to 140°C. The organic solvent A has a Clog P value of 0.1 or greater and thus is likely to be collected at the gas-liquid interface. Further, since the surface tension is in a range of 20.0 mN/m to 29.0 mN/m, the dynamic surface tension of the ink can be decreased in a short time, landing interference is suppressed, and accordingly, an image having excellent graininess can be obtained.

In addition, since the organic solvent A has a Clog P value of 1.6 or less, the dispersibility of the ink is improved, and the jettability is excellent.

Further, since the organic solvent A has a boiling point of 80°C to 140°C, water contained in the ink is evaporated after the landing interference is suppressed by the organic solvent A, and the organic solvent A is also volatilized. In this manner, in a case where drying of the ink further progresses, an increase in dynamic surface tension as in the related art is suppressed without movement of the organic solvent to the inside of the ink. In a case where a line image is recorded on a solid image, since an increase in dynamic surface tension of the first ink having landed earlier is suppressed, a difference between the dynamic surface tension of the first ink having landed earlier and the dynamic surface tension of the second ink having landed later is decreased. Therefore, bleeding is suppressed.

It is considered that the ink described in JP2020-105310A does not contain the organic solvent A, and thus the effects of the present disclosure cannot be obtained.

Hereinafter, each component contained in the ink according to the present disclosure will be described.

### <Water>

The ink according to the present disclosure contains water.

The content of water is preferably 40% by mass or greater, more preferably 50% by mass or greater, and still more preferably 60% by mass or greater with respect to the total amount of the ink. Further, the upper limit of the content of water is not particularly limited, but is preferably 95% by mass or less, more preferably 90% by mass or less, and still more preferably 80% by mass or less.

### <Organic solvent A>

The ink according to the present disclosure contains an organic solvent A having a surface tension of 20.0 mN/m to 29.0 mN/m, a Clog P value of 0.1 to 1.6, and a boiling point of 80°C to 140°C.

### (Surface tension)

The surface tension of the organic solvent A is in a range of 20.0 mN/m to 29.0 mN/m, more preferably in a range of 20.0 mN/m to 26.0 mN/m, and still more preferably in a range of 22.0 mN/m to 26.0 mN/m. The surface tension is measured at 25°C by a plate method using a surface tension meter, for example, an automatic surface tension meter (product name, "DY-300", manufactured by Kyowa Interface Science Co., Ltd.).

### (Clog P value)

The organic solvent A has a Clog P value of 0.1 to 1.6. The Clog P value is a parameter representing hydrophobicity of a compound. The hydrophobicity of a compound increases as the Clog P value increases.

In the present disclosure, the Clog P value is calculated using ChemDraw (registered trademark) Professional (ver. 16.0.1.4) (manufactured by PerkinElmer Informatics).

### (Boiling point)

The organic solvent A has a boiling point of 80°C to 140°C. In the present disclosure, the boiling point denotes a boiling point at 1 atm (101,325 Pa).

The surface tensions, the Clog P values, and the boiling points of compounds known as organic solvents are listed in Tables 1 to 3.

Examples of the organic solvent A include compounds having a surface tension of 20.0 mN/m to 29.0 mN/m, a Clog P value of 0.1 to 1.6, and a boiling point of 80°C to 140°C among the compounds listed in Tables 1 to 3.

**[Table 1]**

| | Name | Boiling point (°C) | Surface tension (mN/m) | Clog P value |
|---|---|---|---|---|
| Monoalcohol | Methanol | 64 | 22.5 | -0.76 |
| | Ethanol | 78 | 22.4 | -0.24 |
| | 2-Propanol | 82 | 23 | 0.07 |
| | 1-Propanol | 97 | 23.3 | 0.29 |
| | tert-Butyl alcohol | 83 | 20.7 | 0.47 |
| | 2-Butanol | 99 | 22.6 | 0.60 |
| | 2-Methylpropanol | 108 | 22.6 | 0.69 |
| | 1-Butanol | 117 | 24.6 | 0.82 |
| | 2-Methyl-2-butanol | 102 | 21.8 | 1.00 |
| | 2,2-Dimethyl-1-propanol | 114 | 25 | 1.09 |
| | 3-Methyl-2-butanol | 112 | 24.2 | 1.00 |
| | 3-Pentanol | 115 | 25.7 | 1.13 |
| | 2-Pentanol | 119 | 22.9 | 1.13 |
| | 2-Methyl-1-butanol | 128 | 25.7 | 1.22 |
| | 3 -Methyl -1 -butanol | 132 | 25.7 | 1.22 |
| | 1-Pentanol | 138 | 23.8 | 1.35 |
| | 4-Methyl-2-pentanol | 131 | 22.8 | 1.53 |
| | 1-Hexanol | 157 | 26.2 | 1.88 |
| | 2-Ethyl-1-hexanol | 185 | 27.7 | 2.81 |
| | 1-Octanol | 195 | 27.5 | 2.94 |

**[Table 2]**

| | Name | Boiling point (°C) | Surface tension (mN/m) | Clog P value |
|---|---|---|---|---|
| Diol | Propylene glycol | 188 | 36.7 | -1.06 |
| | 1,2-Butanediol | 193 | 36 | -0.53 |
| | 1,3-Butylene glycol | 208 | 36.1 | -0.73 |
| | 1,2-Pentanediol | 206 | 27.2 | 0.00 |
| | 1,2-Hexanediol | 223 | 25.02 | 0.53 |
| | 1,2-Octanediol | 295 | 19.9 | 1.59 |
| | Diethylene glycol | 245 | 44.9 | -1.30 |

**[Table 3]**

| | Name | Boiling point (°C) | Surface tension (mN/m) | Clog P value |
|---|---|---|---|---|
| Alkylene glycol monoalkyl ether | Ethylene glycol monomethyl ether | 124 | 31.8 | -0.61 |
| | Propylene glycol monomethyl ether | 121 | 27.7 | -0.30 |
| | Ethylene glycol monoethyl ether | 135 | 28.2 | -0.22 |
| | Ethylene glycol monoisopropyl ether | 144 | 30 | 0.09 |
| | Ethylene glycol monopropyl ether | 150 | 28 | 0.31 |
| | Propylene glycol monopropyl ether | 150 | 25.9 | 0.62 |
| | Ethylene glycol mono-tert-butyl ether | 152 | 26.3 | 0.49 |
| | Ethylene glycol monoisobutyl ether | 160 | 26.1 | 0.71 |
| | Ethylene glycol mono-n-butyl ether | 171 | 27 | 0.84 |
| | Propylene glycol mono-tert-butyl ether | 151 | 24.2 | 0.80 |
| | Propylene glycol mono-n-butyl ether | 170 | 26.3 | 1.15 |
| | Ethylene glycol monohexyl ether | 208 | 27.7 | 1.90 |
| | Ethylene glycol mono-2-ethylhexyl ether | 229 | 25.8 | 2.83 |
| Polyalkylene glycol monoalkyl ether | Diethylene glycol monoethyl ether | 202 | 31.8 | -0.39 |
| | Diethylene glycol monoisobutyl ether | 229 | 30 | 0.54 |
| | Diethylene glycol mono-n-butyl ether | 230 | 30 | 0.67 |
| | Diethylene glycol monohexyl ether | 258 | 29.6 | 1.72 |
| | Triethylene glycol monobutyl ether | 280 | 31.4 | 0.49 |
| | Diethylene glycol mono-2-ethylhexyl ether | 272 | 29 | 2.65 |
| Triol | Glycerin | 290 | 64.9 | -1.54 |

Among the examples, a monoalcohol having 4 or 5 carbon atoms is preferable as the organic solvent A. Examples of the monoalcohol having 4 or 5 carbon atoms include 1-butanol, tert-butyl alcohol, 2-butanol, 2-methylpropanol, 2-methyl-2-butanol, 2,2-dimethyl-1-propanol, 3-methyl-2-butanol, 2-methyl-1-butanol, 3-methyl-1-butanol, 1-pentanol, 2-pentanol, and 3-pentanol.

Further, the monoalcohol is a compound containing one hydroxyl group. The monoalcohol does not include alkylene glycol monoalkyl ether and polyalkylene glycol monoalkyl ether.

The optimal functions of the monoalcohol having 4 or 5 carbon atoms are a function of decreasing the surface tension of the ink and a function of volatilizing the organic solvent from the ink. Therefore, in a case where the ink contains the monoalcohol having 4 or 5 carbon atoms, an image with excellent graininess and suppressed bleeding can be obtained.

Further, a linear monoalcohol is preferable as the organic solvent A. Examples of the linear monoalcohol include 1-propanol, 1-butanol, and 1-pentanol.

The linear monoalcohol is likely to line up at the gas-liquid interface of the ink and has a high surface activity. Therefore, the surface tension of the ink can be decreased even with a small content of the monoalcohol as compared with other compounds. The linear monoalcohol is a hydrophobic organic solvent, but the content thereof can be decreased, and thus the ink is unlikely to be hydrophobic. Therefore, degradation of the dispersibility due to hydrophobization of the ink is suppressed, and thus generation of an aggregate is suppressed. As a result, the j ettability of the ink is improved.

For the reason described above, a linear monoalcohol having 4 or 5 carbon atoms is particularly preferable as the organic solvent A. That is, 1-butanol or 1-pentanol is particularly preferable as the organic solvent A.

### <Organic solvent B>

The ink according to the present disclosure further contains an organic solvent B having a boiling point of 150°C to 250°C in addition to the organic solvent A, and the content of the organic solvent B is preferably in a range of 10% by mass to 35% by mass with respect to the total amount of the ink.

Examples of the organic solvent B include compounds having a boiling point of 150°C to 250°C among the compounds listed in Tables 1 to 3.

In a case where the content of the organic solvent B is 10% by mass or greater, the jettability of the ink is improved. Further, in a case where the content of the organic solvent B is 35% by mass or less, the drying properties of the ink are improved.

From the viewpoint of further improving the j ettability and the drying properties of the ink, the content of the organic solvent B is more preferably in a range of 15% by mass to 30% by mass with respect to the total amount of the ink.

From the viewpoint of further improving the jettability and the drying properties of the ink, the boiling point of the organic solvent B is in a range of 150°C to 250°C, more preferably in a range of 160°C to 240°C, and still more preferably in a range of 170°C to 230°C.

Examples of the organic solvent B include alkylene glycol, alkylene glycol monoalkyl ether, alkylene glycol dialkyl ether, and a nitrogen-containing heterocyclic compound. Among these, propylene glycol, 1,2-butanediol, 1,3-butylene glycol, diethylene glycol monomethyl ether, diethylene glycol monoethyl ether, dipropylene glycol dimethyl ether, diethylene glycol diethyl ether, ethylene glycol, N-methylpyrrolidone, dipropylene glycol, or diethylene glycol is preferable as the organic solvent B.

In a case where the ink contains the organic solvent A and the organic solvent B, the proportion of the content of the organic solvent A in the total content of the organic solvent A and the organic solvent B is preferably in a range of 5% by mass to 50% by mass. In a case where the proportion thereof is 5% by mass or greater, the organic solvent A is likely to be unevenly distributed at the gas-liquid interface of the ink, the graininess of the image is improved, and bleeding is further suppressed. Meanwhile, in a case where the proportion thereof is 50% by mass or less, the surface tension and the viscosity of the ink inside a nozzle are likely to be maintained to be constant, and the jettability is improved.

From the viewpoint of further improving the jettability and obtaining an image having more excellent graininess and further suppressed bleeding, the proportion thereof is more preferably in a range of 10% by mass to 40% by mass and still more preferably in a range of 15% by mass to 30% by mass.

The ink according to the present disclosure may contain an organic solvent other than the organic solvent A and the organic solvent B. In a case where the ink according to the present disclosure contains the organic solvent A and the organic solvent B, the proportion of the total content of the organic solvent A and the organic solvent B in the total content of all the organic solvents contained in the ink is preferably 80% by mass or greater, more preferably 90% by mass or greater, and still more preferably 100% by mass.

### <Coloring material>

It is preferable that the ink according to the present disclosure contains a coloring material.

Examples of the coloring material include a dye and a pigment. Among the examples, from the viewpoint of durability such as heat resistance, light fastness, or water resistance, a pigment is preferable as the coloring material.

In a case where a pigment is used as the coloring agent, the ink can contain the pigment as a pigment dispersion liquid. The pigment dispersion liquid is a liquid obtained by dispersing the pigment in a liquid medium using a dispersing agent, and contains at least the pigment, the dispersing agent, and the liquid medium. The details of the dispersing agent will be described below. Further, the liquid medium may be water or an organic solvent.

In addition, the pigment may be an organic pigment or an inorganic pigment.

Examples of the organic pigment include an azo pigment, a polycyclic pigment, a chelate dye, a nitro pigment, a nitroso pigment, and aniline black. Among these, an azo pigment or a polycyclic pigment is preferable as the organic pigment.

Examples of the azo pigment include azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate and an acid dye-type chelate.

Examples of the inorganic pigment include titanium oxide, iron oxide, calcium carbonate, barium sulfate, aluminum hydroxide, barium yellow, cadmium red, chrome yellow, and carbon black.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

The volume average particle diameter of the pigment is preferably in a range of 10 nm to 200 nm, more preferably in a range of 20 nm to 180 nm, and still more preferably in a range of 30 nm to 150 nm. In a case where the volume average particle diameter thereof is 200 nm or less, the color reproducibility is satisfactory, and the jettability is improved in a case where an image is recorded by an ink jet recording method. In a case where the volume average particle diameter is 10 nm or greater, the light fastness is satisfactory.

Further, the particle size distribution of the pigment is not particularly limited, and may be any of a wide particle size distribution or a monodispersed particle size distribution. In addition, two or more pigments having a monodispersed particle size distribution may be used in the form of a mixture.

The volume average particle diameter and the particle size distribution of the pigment are values measured by a particle size distribution measuring device (for example, MICROTRAC UPA (registered trademark) EX150, manufactured by Nikkiso Co., Ltd.).

The content of the coloring agent is preferably in a range of 1% by mass to 20% by mass and more preferably in a range of 1% by mass to 10% by mass with respect to the total amount of the ink.

### <Pigment dispersing agent>

In a case where the ink according to the present disclosure contains a pigment, it is preferable that the ink according to the present disclosure contains a pigment dispersing agent in order to disperse the pigment in water. In the present disclosure, the pigment dispersing agent is a compound having a function of dispersing the pigment. The pigment dispersing agent is adsorbed on the surface of the pigment and applied to at least a part of the surface of the pigment, and thus the pigment can be dispersed in water. Further, in a case where a self-dispersing pigment that can be dispersed in water even in the absence of a pigment dispersing agent is used as the white pigment, the ink may not contain a pigment dispersing agent.

The form of the pigment dispersing agent contained in the ink is not particularly limited and may be any of a random polymer, a block polymer, or a graft polymer. Further, the pigment dispersing agent may be a polymer having a crosslinking structure. Among the forms, it is preferable that the pigment dispersing agent is a polymer having a crosslinking structure. It is considered that in a case where the pigment dispersing agent is a polymer having a crosslinking structure, the pigment dispersing agent is unlikely to be released from the surface of the pigment, and thus the dispersion stability of the pigment is high.

In the present disclosure, the polymer denotes a compound having a weight-average molecular weight of 1,000 or greater.

In the present disclosure, the weight-average molecular weight (Mw) denotes a value measured by gel permeation chromatography (GPC). The measurement according to gel permeation chromatography (GPC) is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID × 15 cm), and tetrahydrofuran (THF) as an eluent. Further, the measurement is performed under measurement conditions of a sample concentration of 0.45% by mass, a flow rate of 0.35 ml/min, a sample injection volume of 10 µl, and a measurement temperature of 40°C using an RI detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

The polymer having a crosslinking structure is not particularly limited as long as the polymer is a polymer having at least one crosslinking structure in a molecule.

Whether or not the polymer contained in the ink has a crosslinking structure can be determined, for example, by the following method. First, the polymer is separated from the ink by a separation method such as solvent extraction. The presence or absence of the crosslinking structure can be comprehensively determined by analyzing the separated polymer using various analysis methods such as a nuclear magnetic resonance method (NMR), an infrared spectroscopy method (IR), and a thermal analysis method.

The polymer having a crosslinking structure (hereinafter, also referred to as "crosslinked polymer") is formed, for example, by crosslinking an uncrosslinked polymer (hereinafter, also referred to as "uncrosslinked polymer") with a crosslinking agent. It is preferable that the uncrosslinked polymer is a water-soluble polymer.

In the present disclosure, the term "water-soluble" indicates a property in which 1 g or greater of a substance is dissolved in 100 g of water at 25°C. As the term "water-soluble" property, a property in which 3 g or greater (more preferably 10 g or greater) of a substance is dissolved in 100 g of water at 25°C is preferable.

Even in a case where the uncrosslinked polymer is water-soluble, the crosslinked polymer is not necessarily water-soluble.

Examples of the uncrosslinked polymer include a vinyl resin, an acrylic resin, a urethane resin, and a polyester resin. Among these, an acrylic resin is preferable as the uncrosslinked polymer.

It is preferable that the uncrosslinked polymer is a polymer containing a functional group that can be crosslinked by a crosslinking agent. Examples of the crosslinkable functional group include a carboxy group or a salt thereof, an isocyanate group, and an epoxy group. Among these, from the viewpoint of improving the dispersibility of the pigment, a carboxy group or a salt thereof is preferable, and a carboxy group is particularly preferable as the crosslinkable functional group. That is, a polymer containing a carboxy group is preferable as the uncrosslinked polymer.

It is preferable that the uncrosslinked polymer is a copolymer having a structural unit derived from a monomer containing a carboxy group (hereinafter, referred to as "carboxy group-containing monomer"). The structural unit derived from a carboxy group-containing monomer contained in a copolymer may be used alone or two or more kinds thereof. The copolymer may be a random copolymer or a block copolymer, but is preferably a random copolymer.

Examples of the carboxy group-containing monomer include (meth)acrylic acid, β-carboxyethyl acrylate, fumaric acid, itaconic acid, maleic acid, and crotonic acid.

From the viewpoints of the crosslinking properties and the dispersibility, (meth)acrylic acid or β-carboxyethyl acrylate is preferable, and (meth)acrylic acid is more preferable as the carboxy group-containing monomer.

The content of the structural unit derived from a carboxy group-containing monomer is preferably in a range of 5% by mass to 40% by mass, more preferably in a range of 10% by mass to 35% by mass, and still more preferably in a range of 10% by mass to 30% by mass with respect to the total amount of the uncrosslinked polymer.

It is preferable that the uncrosslinked polymer has a structural unit derived from a hydrophobic monomer in addition to the structural unit derived from a carboxy group-containing monomer. The structural unit derived from a hydrophobic monomer contained in the copolymer may be used alone or two or more kinds thereof.

Examples of the hydrophobic monomer include (meth)acrylate containing an alkyl group having 1 to 20 carbon atoms, (meth)acrylate having an aromatic ring (such as benzyl (meth)acrylate or phenoxyethyl (meth)acrylate), styrene, and a styrene derivative.

The content of the structural unit derived from a hydrophobic monomer is preferably in a range of 60% by mass to 95% by mass, more preferably in a range of 65% by mass to 90% by mass, and still more preferably in a range of 70% by mass to 90% by mass with respect to the total amount of the uncrosslinked polymer.

The uncrosslinked polymer is preferably a random copolymer having a structural unit derived from a carboxy group-containing monomer and at least one of a structural unit derived from a (meth)acrylate containing an alkyl group having 1 to 20 carbon atoms or a structural unit derived from a (meth)acrylate having an aromatic ring, more preferably a random copolymer having a structural unit derived from (meth)acrylic acid and a structural unit derived from a (meth)acrylate having an aromatic ring, and still more preferably a copolymer having a structural unit derived from (meth)acrylic acid and a structural unit derived from benzyl (meth)acrylate.

The weight-average molecular weight (Mw) of the uncrosslinked polymer is not particularly limited, but is preferably in a range of 3,000 to 300,000, more preferably in a range of 5,000 to 200,000, and still more preferably in a range of 7,000 to 100,000 from the viewpoint of the dispersibility of the white pigment.

The preferable ranges of the weight-average molecular weight of the crosslinked polymer are the same as the preferable ranges of the weight-average molecular weight of the uncrosslinked polymer.

It is preferable that the crosslinking agent used in a case of crosslinking the uncrosslinked polymer is a compound having two or more reaction sites with the uncrosslinked polymer (for example, a polymer containing a carboxy group). The crosslinking agent may be used alone or in combination of two or more kinds thereof.

As a combination of the crosslinking agent and the uncrosslinked polymer, a combination of a compound containing two or more epoxy groups (that is, a bi- or higher functional epoxy compound) and a polymer containing a carboxy group is preferable. In this combination, a crosslinking structure is formed by the reaction between the epoxy group and the carboxy group. It is preferable that the crosslinking structure is formed by the crosslinking agent after the pigment is dispersed by the uncrosslinked polymer.

Examples of the bi- or higher functional epoxy compound include ethylene glycol diglycidyl ether, polyethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable as the bi- or higher functional epoxy compound.

Commercially available products may be used as the crosslinking agent.

Examples of the commercially available products include Denacol EX-321, EX-821, EX-830, EX-850, and EX-851 (manufactured by Nagase ChemteX Corporation).

From the viewpoints of the crosslinking reaction rate and the dispersion stability after crosslinking, the molar ratio between a reaction site (for example, an epoxy group) in the crosslinking agent and a reaction site (for example, a carboxy group) in the uncrosslinked polymer is preferably in a range of 1:1.1 to 1:10, more preferably in a range of 1:1.1 to 1:5, and still more preferably in a range of 1:1.1 to 1:3.

The mixing ratio between the pigment and the pigment dispersing agent is preferably in a range of 1:0.02 to 1:2, more preferably in a range of 1:0.03 to 1:1.5, and still more preferably in a range of 1:0.04 to 1:1 in terms of the mass.

### <Resin>

The ink according to the present disclosure may contain at least one resin between a water-soluble resin or resin particles (hereinafter, also referred to as "resin component (X)").

The resin component (X) may be at least one kind of resin particles, at least one kind of a water-soluble resin, or a combination of at least one kind of resin particles and at least one kind of a water-soluble resin.

The resin particles are preferably particles including a water-insoluble resin.

The "water-insoluble" in the water-insoluble resin means a property that the amount dissolved in 100 g of water at 25°C is less than 1 g.

The content of the resin component (X) is preferably in a range of 1% by mass to 10% by mass with respect to the total amount of the ink.

In a case where the content of the resin component (X) is 1% by mass or greater, an effect of thickening the ink is likely to be obtained.

In a case where the content of the resin component (X) is 10% by mass or less, the jettability of the ink is further improved.

### - Water-soluble resin -

From the viewpoint of improving the jettability, it is preferable that the resin component (X) contains a water-soluble resin.

### - Water-soluble resin X1 -

In a case where the resin component (X) contains a water-soluble resin, the water-soluble resin preferably contains a water-soluble resin X1 containing an alkyl group having 1 to 3 carbon atoms, an anionic group, and a cyclic structure.

In a case where the water-soluble resin contains a water-soluble resin X1, a proportion of the water-soluble resin X1 in the total amount of the water-soluble resin is preferably 50% by mass to 100% by mass, more preferably 60% by mass to 100% by mass, and still more preferably 80% by mass to 100% by mass.

In a case where the water-soluble resin contains a water-soluble resin X1, a proportion of the water-soluble resin X1 in the total amount of the resin component (X) is preferably 50% by mass to 100% by mass, more preferably 60% by mass to 100% by mass, and still more preferably 80% by mass to 100% by mass.

### -Alkyl group having 1 to 3 carbon atoms-

The alkyl group having 1 to 3 carbon atoms in the water-soluble resin X1 is a methyl group, an ethyl group, or a propyl group (that is, an n-propyl group or an i-propyl group), and a methyl group or an ethyl group is preferable and a methyl group is more preferable.

The water-soluble resin X1 may contain only one or two or more kinds of the alkyl groups having 1 to 3 carbon atoms.

The alkyl group having 1 to 3 carbon atoms in the water-soluble resin X1 may be introduced into the structure of the water-soluble resin X1 by polymerizing a polymerizable monomer containing an alkyl group having 1 to 3 carbon atoms.

That is, the water-soluble resin X1 may contain a structural unit derived from a polymerizable monomer containing an alkyl group having 1 to 3 carbon atoms.

As the polymerizable monomer containing an alkyl group having 1 to 3 carbon atoms, (meth)acrylic acid alkyl ester in which the alkyl group in the alkyl ester structure has 1 to 3 carbon atoms [hereinafter, also referred to as "(meth)acrylic acid C1-3 alkyl ester"] is preferable.

Specifically, the (meth)acrylic acid C1-3 alkyl ester is methyl (meth)acrylate, ethyl (meth)acrylate, n-propyl (meth)acrylate, or i-propyl (meth)acrylate.

As the (meth)acrylic acid C1-3 alkyl ester, methyl (meth)acrylate or ethyl (meth)acrylate is preferable, and methyl (meth)acrylate is more preferable.

In addition, as the (meth)acrylic acid C1-3 alkyl ester, a methacrylic acid C1-3 alkyl ester is preferable.

In a case where the water-soluble resin X1 contains a (meth)acrylic acid C1-3 alkyl ester unit, the water-soluble resin X1 may contain one kind of the (meth)acrylic acid C1-3 alkyl ester unit, or two or more kinds thereof.

A content of the (meth)acrylic acid C1-3 alkyl ester unit in the water-soluble resin X1 is preferably 3% by mass to 80% by mass, more preferably 3% by mass to 50% by mass, and still more preferably 5% by mass to 50% by mass with respect to the total amount of the water-soluble resin X1.

### -Anionic group-

Examples of the anionic group in the water-soluble resin X1 include an acid group (for example, a carboxy group, a sulfo group, a phosphoric acid group, and the like) and a salt of the acid group (for example, a salt of the carboxy group, a salt of the sulfo group, and a salt of the phosphoric acid group).

The anionic group contained in the water-soluble resin X1 may be used alone or in combination of two or more kinds thereof.

The water-soluble resin X1 may contain both the acid group and the salt of the acid group as the anionic group.

The salt of the acid group (for example, the salt of the carboxy group, the salt of the sulfo group, and the salt of the phosphoric acid group) can be formed by neutralizing the acid group (for example, the carboxy group, the sulfo group, and the phosphoric acid group) with a neutralizing agent.

The acid group may be neutralized before the polymerization of the polymerizable monomer containing an acid group, or after the polymerizable monomer is polymerized.

Examples of the neutralizing agent for neutralizing the acid group include inorganic bases such as an alkali metal hydroxide and an alkaline earth metal hydroxide, and organic bases such as an organic amine.

Examples of the alkali metal include potassium (K) and sodium (Na).

Examples of the alkaline earth metal include calcium (Ca) and magnesium (Mg).

Examples of the alkali metal hydroxide include potassium hydroxide and sodium hydroxide.

Examples of the alkaline earth metal hydroxide include calcium hydroxide and magnesium hydroxide.

Examples of the organic amines include ammonia, a primary amine (for example, ethylamine, monoethanolamine, and the like), a secondary amine (for example, diethylamine, ethylenediamine, and the like), and a tertiary amine (for example, triethylamine, triethanolamine, isopropylethylamine, pyrrolidine, piperidine, and the like), and a quaternary ammonium salt. Among these, as the organic amine, an organic amine having a boiling point of 80°C or higher is preferable from the viewpoint of storage stability.

From the viewpoint of the storage stability, the neutralizing agent is preferably an alkali metal hydroxide or an organic amine, and more preferably an alkali metal hydroxide or an organic amine having a boiling point of 80°C or higher.

Examples of the organic amine having a boiling point of 80°C or higher include ethylenediamine (117°C), triethylamine (90°C), monoethanolamine (170°C), triethanolamine (208°C), isopropylethylamine (127°C), and pyrrolidine (87°C), and piperidine (106°C).

It is preferable that the water-soluble resin X1 contains at least one of a carboxy group or a salt of the carboxy group as the anionic group.

In this case, the proportion (% by mole; hereinafter, also referred to as a degree of neutralization) of the salt of the carboxy group in the total of the carboxy group and the salt of the carboxy group is preferably 40% by mole or greater, preferably 50% by mole or greater, more preferably 60% by mole or greater, and still more preferably 80% by mole or greater.

In addition, the upper limit of the degree of neutralization can be 100% by mole.

The anionic group which can be contained in the water-soluble resin X1 may be introduced into the structure of the water-soluble resin X1 by polymerizing a polymerizable monomer containing an anionic group (and, as necessary, neutralizing the polymerizable monomer with a neutralizing agent).

That is, the water-soluble resin X1 may contain a structural unit derived from a polymerizable monomer containing an anionic group.

As the polymerizable monomer containing an anionic group, (meth)acrylic acid is particularly preferable.

In a case where the water-soluble resin X1 contains a structural unit derived from a polymerizable monomer containing anionic group (for example, (meth)acrylic acid), a content of the structural unit derived from a polymerizable monomer containing anionic group is preferably 5% by mass to 40% by mass, and more preferably 8% by mass to 20% by mass with respect to the total amount of the water-soluble resin X1.

The cyclic structure in the water-soluble resin X1 has preferably at least one of an aromatic ring or an aliphatic ring and more preferably an aromatic ring.

The water-soluble resin X1 may have only one or two or more kinds of cyclic structures.

In the present disclosure the aromatic ring means a cyclic unsaturated ring having aromaticity.

Examples of the aromatic ring include an aromatic hydrocarbon ring such as a benzene ring, a naphthalene ring, an anthracene ring, or a pyrene ring and a heterocyclic aromatic ring such as a pyridine ring, a pyrrole ring, a furan ring, a thiophene ring, an imidazolyl ring, or an acridone ring.

Among these, an aromatic hydrocarbon ring is preferable as the aromatic ring.

In a case where the cyclic structure in the water-soluble resin X1 contains an aromatic ring, the aromatic ring can be introduced into the structure of the water-soluble resin X1 by polymerizing a polymerizable monomer containing an aromatic ring.

As the polymerizable monomer containing an aromatic ring, a polymerizable monomer containing an aromatic ring and an ethylenically unsaturated double bond is preferable, and a vinyl polymerizable monomer containing an aromatic ring is more preferable.

Examples of the polymerizable monomer containing an aromatic ring include styrene, methylstyrene, divinylbenzene, vinylpyridine, diallyl phthalate, and (meth)acrylates containing an aromatic ring (such as benzyl acrylate or phenoxyethyl acrylate).

The polymerizable monomer containing an aromatic ring may be unsubstituted, or may be a substituted polymerizable monomer substituted with a substituent. Examples of the substituent include a halogen atom, an alkyl group, a carboxylic acid group, and a hydroxyl group.

Examples of the halogen atom include a chlorine atom, a bromine atom, and an iodine atom.

As the alkyl group, an alkyl group having 1 to 12 carbon atoms (preferably 1 to 8 carbon atoms) is preferable, and examples thereof include a methyl group, an ethyl group, a propyl group, a butyl group, and a hexyl group. The alkyl group may be unsubstituted or may have a substituent same as the substituents described above.

Specific examples of the structural unit derived from a polymerizable monomer containing an aromatic ring, which can be contained in the water-soluble resin X1, are the same as the specific examples of the structural unit derived from a polymerizable monomer containing an aromatic ring, which can be contained in the pigment dispersion resin described above.

A content of the structural unit derived from a polymerizable monomer containing a cyclic structure (for example, an aromatic ring) in the water-soluble resin X1 is preferably 50% by mass to 85% by mass, and more preferably 60% by mass to 80% by mass with respect to the total amount of the water-soluble resin X1.

It is particularly preferable that the water-soluble resin X1 has a structural unit derived from (meth)acrylic acid C1-3 alkyl ester [that is, (meth)acrylic acid alkyl ester in which the alkyl group in the alkyl ester structure has 1 to 3 carbon atoms], a structural unit derived from (meth)acrylic acid, and a structural unit derived from a polymerizable monomer having a cyclic structure.

The preferable content of each structural unit in this aspect is as described above.

In the above-described aspect, the concept of "structural unit derived from (meth)acrylic acid" includes both the structural unit obtained by polymerizing (meth)acrylic acid (that is, structural unit containing a carboxy group) and the structural unit obtained by polymerizing and neutralizing (meth)acrylic acid (that is, structural unit containing a salt of the carboxy group) (here, the neutralization may be performed before or after polymerization).

The weight-average molecular weight of the water-soluble resin X1 is preferably in a range of 5,000 to 100,000. In a case where the weight-average molecular weight of the water-soluble resin X1 is in the above-described range, bleeding and blocking of an image are further suppressed. In addition, the jettability of the ink is more excellent.

From the viewpoint of the jettability of the ink, the weight-average molecular weight of the water-soluble resin X1 is more preferably in a range of 10,000 to 80,000 and still more preferably in a range of 10,000 to 30,000.

### - Resin particles -

The resin component (X) may contain resin particles.

Here, the resin particles are distinguished from the pigment dispersing agent in terms that the resin particles are particles consisting of a resin.

As described above, a water-insoluble resin is preferable as the resin constituting the resin particles.

As the resin particles, particles consisting of an acrylic resin (hereinafter, also referred to as acrylic resin particles), particles consisting of a polyester resin (hereinafter, also referred to as polyester resin particles), particles consisting of a polyurethane resin (hereinafter, also referred to as polyurethane resin particles), or particles consisting of a polyolefin resin (hereinafter, also referred to as polyolefin resin particles) are preferable.

Further, in the present disclosure, the polyester resin indicates a polymer compound having an ester bond in the main chain. Examples of the polyester resin include a polycondensate of polyvalent carboxylic acid (such as dicarboxylic acid) and polyalcohol (such as a diol).

Further, in the present disclosure, the polyolefin resin indicates a polymer (a homopolymer or a copolymer) of a raw material monomer containing an olefin. Examples of the polyolefin resin include a polymer of one kind of olefin, a copolymer of two or more kinds of olefins, and a copolymer of one or more kinds of olefins and one or more kinds of other monomers. Examples of the olefin include an α-olefin having 2 to 30 carbon atoms.

In the present disclosure, the polyurethane resin indicates a polymer compound having a urethane bond.

The resin particles preferably contain acrylic resin particles.

The proportion of the acrylic resin particles in the resin particles is preferably 60% by mass or greater, more preferably 80% by mass or greater, and still more preferably 90% by mass or greater.

Examples of the resin particles include known resin particles described in paragraphs 0062 to 0076 of JP2016-188345A and paragraphs 0109 to 0140 of WO2013/180074A.

The preferable ranges of the weight-average molecular weight of the resin constituting the resin particles are the same as the preferable ranges of the weight-average molecular weight of the water-soluble resin X1.

### <Surfactant>

It is preferable that the ink according to the present disclosure contains a surfactant. The kind of the surfactant is not particularly limited, and may be any of an anionic surfactant, a cationic surfactant, a betaine-based surfactant, or a nonionic surfactant. Further, examples of the surfactant include an acrylic surfactant, a fluorine-based surfactant, and a silicone-based surfactant.

In the related art, for example, in a case where a solid image is recorded using a first ink, and a line image is recorded on the solid image using a second ink, bleeding of the line image occurs in some cases. The reason for this is assumed to be that, since the dynamic surface tension of the first ink having landed earlier is increased after a decrease once and then increased to be greater than the dynamic surface tension of the second ink having landed later, the second ink having a relatively lower dynamic surface tension is attracted to the first ink having a relatively higher dynamic surface tension, and thus bleeding occurs.

It is preferable that the ink according to the present disclosure contains a silicone-based surfactant. Since the silicone-based surfactant has a high surface activity, the surface activity is unlikely to be lost even in a case where drying of the ink progresses, and the dynamic surface tension is maintained at a decreased level. Therefore, since the difference in dynamic surface tension between the first ink having landed earlier and the second ink having landed later decreases, the bleeding of the image is suppressed.

The silicone-based surfactant is a surfactant having a siloxane structure. Examples of the silicone-based surfactant include BYK-302, BYK-307, BYK-331, BYK-333, BYK-345, BYK-347, BYK-348, BYK-349, BYK-378, BYK-3400, BYK-3450, BYK-3451, BYK-3455, and BYK-3760 (all manufactured by BYK-Chemie GmbH), KF-351A, KF-352A, KF-353, KF-354L, KF-355A, KF-615A, KF-945, KF-640, KF-642, KF-643, KF-644, KF-6011, KF-6012, KF-6015, KF-6017, and KF-6020 (all manufactured by Shin-Etsu Chemical Co., Ltd.).

The content of the surfactant is preferably in a range of 0.1% by mass to 5% by mass and more preferably in a range of 0.5% by mass to 3% by mass with respect to the total amount of the ink.

### <Additive>

The ink according to the present disclosure may contain additives such as a co-sensitizer, an ultraviolet absorbing agent, an antioxidant, a fading inhibitor, a conductive salt, and a basic compound, as necessary.

### <Physical properties of ink>

### [Dynamic surface tension]

The dynamic surface tension of the ink according to the present disclosure at 10 ms is in a range of 28.0 mN/m to 38.0 mN/m and preferably in a range of 30.0 mN/m to 35.0 mN/m.

In the present disclosure, the dynamic surface tension at 10 ms is measured by a maximum foaming pressure method in an environment of a temperature of 23°C and a relative humidity of 55%. The dynamic surface tension at 10 ms is measured using, for example, a bubble pressure type dynamic surface tension meter (product name, "BP100", manufactured by KRUSS). The dynamic surface tension at 10 ms is a surface tension calculated from the maximum foam pressure in a case where the time from when bubbles are continuously jetted from the probe capillary tube inserted into an ink and a new interface is formed in the tip of the probe capillary tube (0 ms) to when the maximum foam pressure is obtained is 10 ms.

The dynamic surface tension of the ink at 10 ms is a value closest to the dynamic surface tension at the moment of the ink droplets landing on the recording medium. In a case where the dynamic surface tension of the ink at 10 ms is 38.0 mN/m or less, ink droplets spread on the recording medium, and thus landing interference can be suppressed. An image in which the image density is unlikely to be uneven and the graininess is more excellent can be obtained. Meanwhile, in a case where the dynamic surface tension of the ink at 10 ms is 28.0 mN/m or greater, ink droplets do not extremely spread on the recording medium, and an image with suppressed bleeding can be obtained.

### [Viscosity]

The viscosity of the ink according to the present disclosure is preferably in a range of 1.2 mPa's to 15.0 mPa·s, more preferably in a range of 2.0 mPa's to 13.0 mPa·s, and still more preferably in a range of 2.5 mPa s to 10.0 mPa·s.

The viscosity of the ink is measured at a temperature of 30°C using a rotational viscometer, for example, "VISCOMETER TV-22" (product name, manufactured by Toki Sangyo Co., Ltd.).

### [pH]

From the viewpoint of the storage stability of the ink, the pH of the ink according to the present disclosure is preferably in a range of 6.0 to 11.0, more preferably in a range of 7.0 to 10.0, and still more preferably in a range of 7.0 to 9.0.

The pH of the ink is measured at a temperature of 25°C using a pH meter, for example, "WM-50EG" (product name, manufactured by DKK-TOA Corporation).

### [Image recording method]

An image recording method according to the present disclosure includes a step of applying the ink according to the present disclosure onto a recording medium using an ink jet recording method, to record an image.

Further, the image recording method according to the present disclosure may further include other steps such as a step of drying and removing volatile components such as water and the organic solvent A in the ink applied to the recording medium (hereinafter, also referred to as "ink drying step"), as necessary.

### (Recording medium)

The recording medium used in the image recording method according to the present disclosure is not particularly limited, and examples thereof include so-called coated paper used for general offset printing and the like. The coated paper is provided with a coating layer obtained by applying a coating material to a surface of high-quality paper, alkaline paper, or the like, which is mainly formed of cellulose and is not generally surface-treated.

The coated paper may be generally available on the market. As the coated paper, for example, coated paper for general printing can be used, and specific examples thereof include coated paper (A2, B2) such as "OK TOPCOAT+" (manufactured by OJI PAPER CO., LTD.), and "AURORA COAT" and "ULITE" (manufactured by NIPPON PAPER INDUSTRIES CO., LTD.), and art paper (A1) such as "TOKUBISHI ART" (manufactured by MITSUBISHI PAPER MILLS LIMITED).

The recording medium may be a low water absorption recording medium or a non-water absorption recording medium.

In the present disclosure, the low water absorption recording medium refers to a recording medium having a water absorption coefficient Ka of 0.05 mL/m²·ms^{1/2} to 0.5 mL/m²·ms^{1/2}, preferably 0.1 mL/m²·ms^{1/2} to 0.4 mL/m²·ms^{1/2} and more preferably 0.2 mL/m²·ms^{1/2} to 0.3 mL/m²·ms^{1/2}.

In addition, the non-water absorption recording medium refers to a recording medium having a water absorption coefficient Ka of less than 0.05 mL/m²·ms^{1/2}.

The water absorption coefficient Ka is synonymous with one described in JAPAN TAPPI Pulp and Paper Test Method No. 51:2000 (published by Pulp and Paper Technology Association). Specifically, the absorption coefficient Ka is calculated from the difference in amount of water transfer between the contact time of 100 ms and the contact time of 900 ms, using an automatic scanning absorptometer KM500Win (manufactured by KUMAGAI RIKI KOGYO Co., Ltd.).

A resin base material is preferable as the non-water absorption recording medium. Examples of the resin base material include a base material obtained by molding a thermoplastic resin in a sheet shape.

It is preferable that the resin base material contains polypropylene, polyethylene terephthalate, nylon, polyethylene, or polyimide.

The resin base material may be a transparent resin base material or a colored resin base material, or at least a part thereof may be subjected to a metal vapor deposition treatment or the like.

The shape of the resin base material is not particularly limited, but a sheet-like resin base material is preferable. From the viewpoint of the productivity of the printed material, a sheet-like resin base material which is capable of forming a roll by being wound is more preferable.

### (Ink jet recording method)

The ink jet recording method is not particularly limited as long as it is a method capable of recording an image, and a known method can be used. Examples of the ink jet recording method include an electric charge control method of jetting an ink by using an electrostatic attraction force, a drop-on-demand method (pressure pulse method) of using a vibration pressure of a piezoelectric element, an acoustic ink jet method of converting an electric signal into an acoustic beam, irradiating an ink with the acoustic beam, and jetting the ink using a radiation pressure, and a thermal ink jet (Bubble jet (registered trademark)) method of heating an ink to form air bubbles and utilizing the generated pressure.

Examples of the ink jet heads used in the ink jet recording method include a shuttle type inkjet head in which a short serial head is used to perform recording while the head is allowed to scan a base material in a width direction, and a line type ink jet head that uses a line head in which recording elements are aligned in the entire area on one side of a base material.

In the line type ink jet head, pattern formation can be performed on the entire surface of a base material by scanning the base material in a direction intersecting an alignment direction of recording elements, and a transport system such as a carriage that scans a short head is unnecessary. Further, in the line type inkjet head, complicated scanning control for moving a carriage and a base material is not necessary, and only a base material moves. Therefore, the recording speed can be further increased in the line type ink jet head than the shuttle type ink jet head.

A liquid droplet volume of the ink jetted from the ink jet head is preferably 1 pL (picoliter) to 100 pL, more preferably 3 pL to 80 pL, and still more preferably 3 pL to 50 pL. Examples

Hereinafter, the embodiments of the present invention will be described in detail with reference to examples, but the present disclosure is not limited thereto.

In examples and comparative examples, cyan inks and magenta inks were prepared. In the preparation of the cyan inks and the magenta inks, a cyan pigment dispersion liquid, a magenta pigment dispersion liquid, and an aqueous solution of a water-soluble resin were prepared in advance.

### Preparation of cyan pigment dispersion liquid

### - Synthesis of resin dispersing agent Q-1 -

A monomer feed composition was prepared by mixing methacrylic acid (172 parts by mass), benzyl methacrylate (828 parts by mass), and isopropanol (375 parts by mass). Further, an initiator feed composition was prepared by mixing 2,2-azobis(2-methylbutyronitrile) (22.05 parts by mass) and isopropanol (187.5 parts by mass).

Next, isopropanol (187.5 parts by mass) was heated to 80°C in a nitrogen atmosphere, and a mixture of the monomer feed composition and the initiator feed composition was added dropwise thereto for 2 hours. After completion of the dropwise addition, the obtained solution was further maintained at 80°C for 4 hours and then cooled to 25°C. After cooling of the solution, the solvent was removed under reduced pressure, thereby obtaining a methacrylic acid/benzyl methacrylate copolymer. The copolymer had a weight-average molecular weight of about 30,000 and an acid value of 112 mgKOH/g.

### - Preparation of cyan pigment dispersion liquid QC1 -

0.8 equivalents of the amount of methacrylic acid in the obtained copolymer (150 parts by mass) was neutralized with a potassium hydroxide aqueous solution. Thereafter, ion exchange water was added thereto to adjust the concentration of the resin dispersing agent to 25% by mass, thereby obtaining an aqueous solution of a resin dispersing agent Q-1.

The aqueous solution of the resin dispersing agent Q-1 (124 parts by mass), Pigment Blue 15:3 (cyan pigment) (48 parts by mass), water (75 parts by mass), and dipropylene glycol (30 parts by mass) were mixed and dispersed using a beads mill (bead diameter of 0.1 mmϕ, zirconia beads), thereby obtaining a dispersion liquid (uncrosslinked dispersion liquid) in which the cyan pigment was dispersed by the resin dispersing agent Q-1. The pigment concentration of the cyan pigment was 15% by mass.

A crosslinking agent (product name, "Denacol EX-321", manufactured by Nagase ChemteX Corporation) (1.3 parts by mass) and a boric acid aqueous solution (boric acid concentration: 4% by mass) (14.3 parts by mass) were added to the uncrosslinked dispersion liquid (136 parts by mass), and the mixture was allowed to react at 50°C for 6 and a half hours and cooled to 25°C, whereby the resin dispersing agent Q-1 was crosslinked by the crosslinking agent. In this manner, a dispersion liquid (crosslinked dispersion liquid) in which the cyan pigment was dispersed by a crosslinked resin 1 was obtained. Further, the crosslinked resin 1 is a crosslinked substance of the resin dispersing agent Q-1. Next, ion exchange water was added to the obtained crosslinked dispersion liquid, and ultrafiltration was performed using a stirring type ULTRAHOLDER (manufactured by Advantec AS) and an ultrafiltration filter (manufactured by Advantec AS, fractional molecular weight of 50,000, Q0500076E ULTRAFILTER). A cyan pigment dispersion liquid QC1 (cyan pigment concentration of 15% by mass) in which the cyan pigment was dispersed by the crosslinked resin 1 was obtained by performing purification such that the concentration of dipropylene glycol in the crosslinked dispersion liquid was set to 0.1% by mass or less and performing concentration until the pigment concentration reached 15% by mass.

### <Preparation of magenta pigment dispersion liquid>

A magenta pigment dispersion liquid QM1 (pigment concentration of 15% by mass) in which the magenta pigment was dispersed by the crosslinked resin 1 was obtained by performing the same operation as in the preparation of the cyan pigment dispersion liquid except that Pigment Blue 15:3 (cyan pigment) was changed to the same mass of Pigment Red 122 (magenta pigment).

### <Preparation of aqueous solution of water-soluble resin [MAA/MMA/IBOMA]>

A 500 mL three-neck flask equipped with a stirrer, a thermometer, a reflux condenser, and a nitrogen gas introduction pipe was charged with propylene glycol (35 g) and heated to 90°C under a nitrogen stream. A mixed solution obtained by mixing 5.55 g of dimethyl-2,2'-azobis(2-methylpropionate) (product name, "V-601", manufactured by FUJIFILM Wako Pure Chemical Corporation) serving as a polymerization initiator, 10.7 g of methacrylic acid (MAA), 69.3 g of methyl methacrylate (MMA), 20.0 g of isobornyl methacrylate (IBOMA), 1.63 g of dodecyl mercaptan, and 65.00 g of propylene glycol was added dropwise thereto at a constant speed for 2 hours. After completion of the dropwise addition of the mixed solution, the mixture was stirred for 1 hour. Subsequently, a mixed solution obtained by mixing 1.85 g of V-601 and 24.62 g of propylene glycol was added to the obtained reaction mixture, and the mixture was further stirred for 1.5 hours. 120.21 g of propylene glycol was added to the obtained reaction mixture, and 8.56 g of a 50 mass% sodium hydroxide aqueous solution was added dropwise thereto by using a dropping funnel, thereby obtaining a solution of a water-soluble resin [MAA/MMA/IBOMA] (concentration of solid contents: 30% by mass).

The water-soluble resin [MAA/MMA/IBOMA] had an acid value of 60 mgKOH/g, a Clog P value of 1.40, a weight-average molecular weight (Mw) of 15,000, and a glass transition temperature (Tg) of 127°C.

### <Cyan ink>

The following components were mixed, and coarse particles were removed using a 1 µm filter, thereby obtaining a cyan ink.
· Cyan pigment dispersion liquid QC1: amount set such that concentration of cyan pigment was 3% by mass (amount set such that content of crosslinked resin-coated cyan pigment was 5.1% by mass)
· Aqueous solution of water-soluble resin [MAA/MMA/IBOMA]: amount set such that concentration of solid contents was 4% by mass
· Each organic solvent listed in Table 4: each content (% by mass) listed in Table 4
· Surfactant listed in Table 4: each content (% by mass) listed in Table 4
· Water: remaining amount set such that total amount of composition was 100% by mass

Further, the respective organic solvents listed in Table 4 are the organic solvent A, the organic solvent B, and other organic solvents. In the surfactants listed in Table 4, the term "silicone-based" denotes a silicone-based surfactant (product name, "BYK-347", manufactured by BYK-Chemie GmbH). The term "acetylene-based" denotes an acetylene-based surfactant (product name, "SURFYNOL 420", manufactured by Nissin Chemical Co., Ltd.).

### <Magenta ink>

The following components were mixed, and coarse particles were removed using a 1 µm filter, thereby obtaining a magenta ink.
· Magenta pigment dispersion liquid QM1: amount set such that concentration of magenta pigment was 5% by mass (amount set such that content of crosslinked resin-coated magenta pigment was 8.5% by mass)
· Water-soluble resin [MAA/MMA/IBOMA]: amount set such that concentration of solid contents was 4% by mass
· Each organic solvent listed in Table 4: each content (% by mass) listed in Table 4
· Surfactant listed in Table 4: 1% by mass
· Water: remaining amount set such that total amount of composition was 100% by mass

The details of the organic solvent A, the organic solvent B, and other organic solvents listed in Table 4 are as follows.

### (Organic solvent A)

The organic solvent A is an organic solvent having a surface tension of 20.0 mN/m to 29.0 mN/m, a Clog P value of 0.1 to 1.6, and a boiling point of 80°C to 140°C.
· 1-BuOH: 1-butanol
· 3-PeOH: 3-pentanol
· 1-PrOH: 1-propanol
· 4-Me-2-PeOH: 4-methyl-2-pentanol

### (Organic solvent B)

The organic solvent B is an organic solvent having a boiling point of 150°C to 250°C.
· PG: propylene glycol
· 1,2-BD: 1,2-butanediol
· DEGmEE: diethylene glycol monoethyl ether

### (Other organic solvents)

The other organic solvents are organic solvents that do not correspond to the above-described organic solvent A and the above-described organic solvent B.
• IPA: isopropanol
· EGmEE: ethylene glycol monoethyl ether
· 2-Et-1-HxOH: 2-ethyl-1-hexanol
· 1,2-HD: 1,2-hexanediol
· EtOH: ethanol
· EGmME: ethylene glycol monomethyl ether
· 2-Pyrrolidone
· PGmME: propylene glycol monomethyl ether
· Glycerin

In the column of the classification in Table 4, the organic solvent corresponding to the organic solvent A is listed as "A", the organic solvent corresponding to the organic solvent B is listed as "B", and the organic solvents corresponding to the other organic solvents are listed as "other". "Proportion of organic solvent A" denotes the proportion of the content of the organic solvent A in the total content of the organic solvent A and the organic solvent B.

The dynamic surface tensions of the cyan ink and the magenta ink at 10 ms were measured using a bubble pressure type dynamic surface tension meter (product name, "BP100", manufactured by KRUSS) by a maximum foaming pressure method in an environment of a temperature of 23°C and a relative humidity of 55%. The measurement results are listed in Table 4.

The graininess, the bleeding, the jettability, and the drying properties were evaluated using the prepared cyan ink and magenta ink. The evaluation methods are as follows. The evaluation results are listed in Table 4.

### <Graininess>

An image was recorded by applying the prepared ink onto coated paper (trade name, "OK TOPCOAT+", manufactured by OJI PAPER CO., LTD.) serving as a recording medium with a resolution of 1,200 × 1,200 dpi (dots per inch), a jetting amount of 2.6 pL, and a recording duty of 80% using a line head (printer head GELJET GX5000, manufactured by RICOH COMPANY, LTD.) obliquely disposed in a movement direction of the base material. The graininess of the image was evaluated by visually observing the image of the obtained image recorded material. The evaluation standards are as follows. The ranks of 3 and higher are at practically acceptable levels.
5: No roughness was found in the entire image and the surface of the image was uniform.
4: An extremely small amount of roughness was found in the image, but the surface of the image was substantially uniform as a whole.
3: A small amount of roughness was found in the image.
2: A large amount of noticeable roughness was found in the image.
1: A large amount of roughness with a strong shade was found in the image, and the surface of the image was non-uniform.

### <Bleeding>

Two sheets of coated paper (trade name "OK TOPCOAT+", manufactured by OJI PAPER CO., LTD.) were prepared as a recording medium. A cyan solid image was recorded by applying the prepared cyan ink onto the first sheet of the recording medium using a line head (printer head GELJET GX5000, manufactured by RICOH COMPANY, LTD.) obliquely disposed in a movement direction of the base material. A magenta ink was applied onto the obtained cyan solid image in the form of a 25 pixel line image to record a magenta line image.

Further, the prepared magenta ink was applied onto the second sheet of the recording medium to record a magenta solid image. A cyan ink was applied onto the obtained magenta solid image in the form of a 25 pixel line image to record a cyan line image.

The cyan ink and the magenta ink were respectively jetted under the following jet conditions by a single-pass method.

### - Jet conditions -

· Head: 1,200 dpi (dot per inch, 1 inch = 2.54 cm)/20-inch width piezo full line head
· Jetting amount: 2.6 pL
· Driving frequency: 30 kHz (recording medium transportation speed: 635 mm/sec)

The line width of the magenta line image recorded on the cyan solid image and the line width of the cyan line image recorded on the magenta solid image were measured using a microscope.

A difference (hereinafter, also referred to as "line width difference M") between the measured line width of the magenta line image and 529.2 µm which is a theoretical line width of a 25 pixel image at 1,200 dpi was calculated. In addition, a difference (hereinafter, also referred to as "line width difference C") between the measured line width of the cyan line image and 529.2 µm which is a theoretical line width of a 25 pixel image at 1,200 dpi was calculated. The bleeding was evaluated based on the line width difference M and the line width difference C. The evaluation standards are as follows.
4: The larger line width difference between the line width difference M and the line width difference C was less than 200 µm.
3: The larger line width difference between the line width difference M and the line width difference C was 200 µm or greater and less than 300 µm.
2: The larger line width difference between the line width difference M and the line width difference C was 300 µm or greater and less than 500 µm.
1: The larger line width difference between the line width difference M and the line width difference C was 500 µm or greater.

### <Jettability>

An image was recorded by applying the prepared ink onto coated paper (trade name, "OK TOPCOAT+", manufactured by OJI PAPER CO., LTD.) serving as a recording medium with a resolution of 1,200 × 1,200 dpi (dots per inch) and a jetting amount of 2.6 pL using a line head (printer head GELJET GX5000, manufactured by RICOH COMPANY, LTD.) obliquely disposed in a movement direction of the base material. One sheet of the solid image was recorded with a resolution of 1,200 dpi (dot per inch). After completion of the image recording, the ink jet recording device was allowed to stand in an environment of a temperature of 25°C and a relative humidity of 50% for 10 minutes. After 10 minutes, one sheet of the solid image was recorded in the same manner as described above. In this case, the proportion of the number of nozzles from which the ink was not jetted in the total number of nozzles in the ink jet head (hereinafter, also referred to as "jet failure nozzle rate") was calculated. The j ettability of the ink was evaluated based on the jet failure nozzle rate. The evaluation standards are as follows.
5: The jet failure nozzle rate was less than 20%.
4: The jet failure nozzle rate was 20% or greater and less than 40%.
3: The jet failure nozzle rate was 40% or greater and less than 60%.
2: The jet failure nozzle rate was 60% or greater and less than 80%.
1: The jet failure nozzle rate was 80% or greater.

### <Drying properties>

An image was recorded by applying the prepared ink onto coated paper (trade name, "OK TOPCOAT+", manufactured by OJI PAPER CO., LTD.) serving as a recording medium using a line head (printer head GELJET GX5000, manufactured by RICOH COMPANY, LTD.) obliquely disposed in a movement direction of the base material. Two sheet of the solid images were recorded with a resolution of 1,200 dpi (dot per inch). The two image recorded materials were superimposed in an orientation in which the solid images were in contact with each other. The two sheets of the image recorded materials were pressurized in this state by using an iron plate having the same size as the size of the image recorded materials under conditions of a load of 0.5 kg/cm² and a temperature of 30°C for 1 minute so that the solid images were in close contact with each other. The two image recorded materials were peeled off, and the state of the solid image was visually observed. The drying properties were evaluated based on the sound during the peeling and the state of the solid image. The evaluation standards are as follows.
5: The solid image was not peeled off or transferred, and no sound was generated during the peeling.
4: The solid image was not peeled off or transferred, but a sound was generated during the peeling.
3: The solid image was not peeled off, but slightly transferred (20% by area or less with respect to the entire image).
2: The solid image was not peeled off, but transferred (greater than 20% by area with respect to the entire image).
1: A large part of the solid image was peeled off.

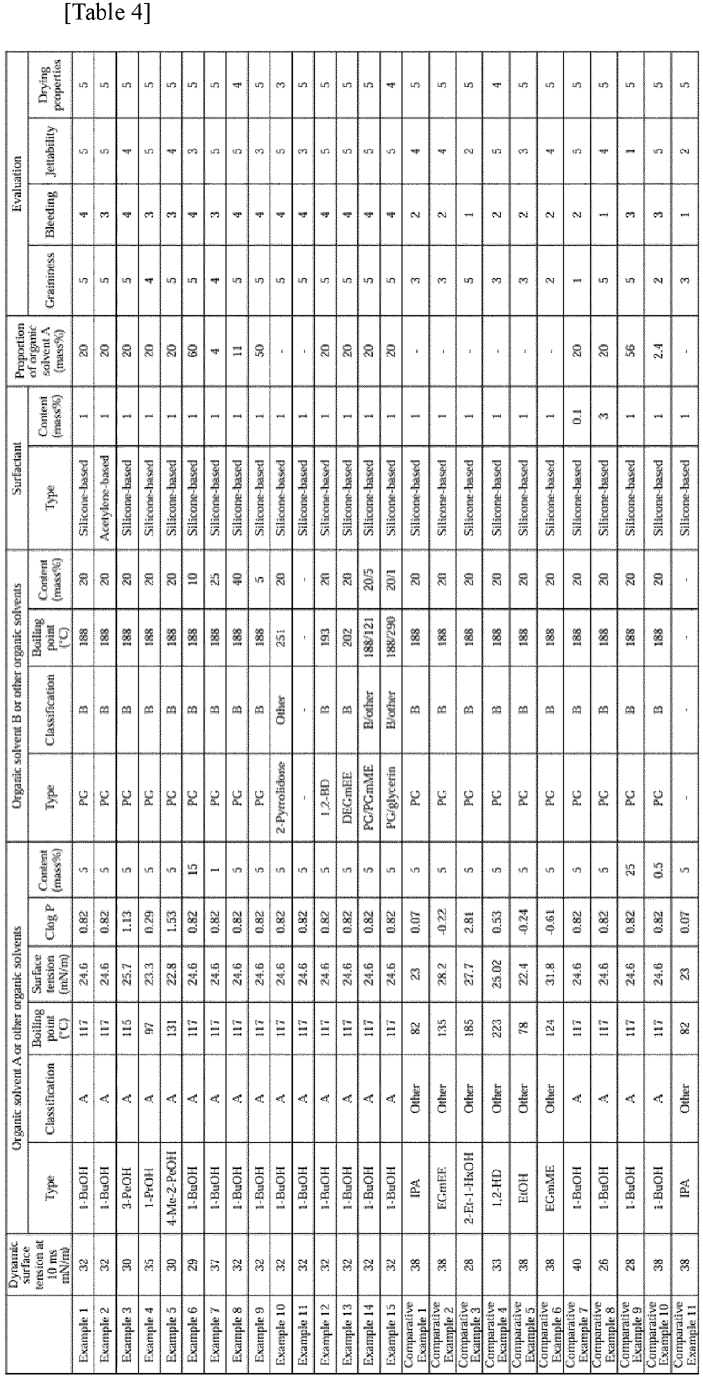

As listed in Table 4, it was found that in Examples 1 to 15, since each ink contained water and the organic solvent A, the content of the organic solvent A was in a range of 1% by mass to 20% by mass with respect to the total amount of the ink, and the dynamic surface tension of the ink at 10 ms was in a range of 28.0 mN/m to 38.0 mN/m, the jettability was excellent, and the obtained image had excellent graininess and suppressed bleeding.

On the contrary, in Comparative Examples 1 to 6 and 11, since each ink did not contain the organic solvent A, the bleeding of the image was confirmed.

In Comparative Example 7, it was found that since the dynamic surface tension of the ink at 10 ms was greater than 38.0 mN/m, the graininess of the image was degraded.

In Comparative Example 8, since the dynamic surface tension of the ink at 10 ms was less than 28.0 mN/m, the bleeding of the image was confirmed.

In Comparative Example 9, it was found that since the content of the organic solvent A was greater than 20% by mass, the j ettability was degraded.

In Comparative Example 10, it was found that since the content of the organic solvent A was less than 1% by mass, the graininess of the image was degraded.

In Example 1, it was found that since the content of the organic solvent B was 10% by mass or greater, the j ettability was excellent as compared with Example 9 and Example 11.

In Example 1, it was found that since the content of the organic solvent B was 35% by mass or less, the drying properties were excellent as compared with Example 8.

In Example 1, it was found that since the proportion of the content of the organic solvent A in the total content of the organic solvent A and the organic solvent B was 5% by mass or greater, the graininess of the image was excellent and the bleeding was suppressed as compared with Example 7.

In Example 1, it was found that since the proportion of the content of the organic solvent A in the total content of the organic solvent A and the organic solvent B was 50% by mass or less, the jettability was excellent as compared with Example 6.

In Example 1, it was found that since the ink contained a monoalcohol having 4 or 5 carbon atoms, the graininess of the image was excellent and the bleeding was suppressed as compared with Example 4. Further, in Example 1, it was found that the jettability was excellent and the graininess of the image was excellent as compared with Example 5.

In Example 1, it was found that since the ink contained a linear monoalcohol, the jettability was excellent as compared with Example 3. Further, in Example 1, it was found that the jettability was excellent and the graininess of the image was excellent as compared with Example 5.

In Example 1, it was found that since the ink contained a silicone-based surfactant, the bleeding of the image was suppressed as compared with Example 2.

The present disclosure of JP2021-186578 filed on November 16, 2021 is incorporated herein by reference in its entirety. Further, all documents, patent applications, and technical standards described in the present specification are incorporated herein by reference to the same extent as in a case of being specifically and individually noted that individual documents, patent applications, and technical standards are incorporated by reference.

## Claims

1. An inkjet ink comprising:
water; and
an organic solvent A having a surface tension of 20.0 mN/m to 29.0 mN/m, a Clog P value of 0.10 to 1.60, and a boiling point of 80°C to 140°C,
wherein a content of the organic solvent A is in a range of 1% by mass to 20% by mass with respect to a total amount of the ink jet ink, and
a dynamic surface tension of the inkjet ink at 10 ms is in a range of 28.0 mN/m to 38.0 mN/m.

2. The inkjet ink according to claim 1, further comprising:
an organic solvent B having a boiling point of 150°C to 250°C,
wherein a content of the organic solvent B is in a range of 10% by mass to 35% by mass with respect to the total amount of the inkjet ink.

3. The inkjet ink according to claim 2,
wherein a proportion of the content of the organic solvent A in a total content of the organic solvent A and the organic solvent B is in a range of 5% by mass to 50% by mass.

4. The ink jet ink according to any one of claims 1 to 3,
wherein the organic solvent A is a monoalcohol having 4 or 5 carbon atoms.

5. The ink jet ink according to any one of claims 1 to 4,
wherein the organic solvent A is a linear monoalcohol.

6. The ink jet ink according to any one of claims 1 to 5, further comprising:
a silicone-based surfactant.

7. An image recording method comprising:
a step of applying the ink jet ink according to any one of claims 1 to 6 onto a base material using an inkjet recording method, to record an image.
